Europäisches Patentamt

European Patent Office

Office européen des brevets

(11) Publication number: **0 195 808**
**B1**

# EUROPEAN PATENT SPECIFICATION

(45) Date of publication of patent specification: **13.12.89**

(51) Int. Cl.⁴: **A 01 C 5/06,** A 01 C 7/20, A 01 B 39/18

(21) Application number: **85904835.7**

(22) Date of filing: **13.09.85**

(86) International application number:
**PCT/GB85/00423**

(87) International publication number:
**WO 86/01680 27.03.86 Gazette 86/07**

## (54) SUSPENSION MECHANISM FOR AGRICULTURAL ROW UNIT.

(30) Priority: **15.09.84 GB 8423366**

(43) Date of publication of application:
**01.10.86 Bulletin 86/40**

(45) Publication of the grant of the patent:
**13.12.89 Bulletin 89/50**

(84) Designated Contracting States:
**AT BE CH DE FR GB IT LI LU NL SE**

(56) References cited:
**EP-A-0 032 742
AU-A- 405 922
FR-A-2 332 692
FR-E- 65 717**

(73) Proprietor: **STANHAY WEBB LIMITED
Swan Lane Exning
Newmarket Suffolk CB8 7HD (GB)**

(72) Inventor: **HOLLAND, Simon, Jeffree, Roy
Hestair Farm Equipment Limited Swan Lane
Exning, Newmarket Suffolk CB8 7HD (GB)**

(74) Representative: **Archer, Philip Bruce et al
Urquhart-Dykes & Lord Trinity Court Trinity
Street Priestgate
Peterborough Cambridgeshire PE1 1DA (GB)**

Courier Press, Leamington Spa, England.

## Description

This invention relates to suspension mechanisms for row units of agricultural precision drills for sowing row crops such as vegetables, cereals and the like.

Row units for precision seed drills of the kind used for vegetables and cereal seed sowing are usually mounted on a toolbar which is itself provided with a headstock whereby it is fully mounted on the hitch links of a tractor. The row units are supported by the toolbar in their transport position, and are drawn by the toolbar and receive drive from a transmission associated with the toolbar during seeding operations. Various other arrangements are possible, but the latter is fairly conventional.

Conventionally, seed drill row units comprise a seeding unit for selecting and dispensing seeds from a supply, and the seeding unit is supported relative to the ground on a frame having front and rear wheels.

Various arrangements have been proposed for mounting the seeding unit in relation to the front and rear wheels of the row unit and for mounting the row unit on the toolbar itself. Such proposals include the use of freely pivoted linkages for transmitting draught forces, and indeed for supporting the row unit during transport. The prior art also includes FR—E—65717 and EP—A—0032742.

The shortcomings of these prior proposals include a tendency to vibrate, and unsatisfactory soil contour following, for the purpose of maintenance of constant seeding depth. Depending on the geometry of the pivoted linkages provided, the seeding unit has a tendency to under or overreact to soil contour changes encountered. There is thus a need for apparatus providing a more balanced response to commonly occurring drilling conditions.

An object of this present invention is to provide an agricultural precision seed drill having a suspension mechanism for a row unit thereof offering improvements in relation to one or more of the matters discussed above, or generally.

According to the inventon there is provided an agricultural precision drill as defined in the accompanying claims.

In an embodiment of the invention described below, a suspension mechanism for a row unit of an agricultural precision seed drill has connection means to apply draught forces to the soil-engagable row unit while permitting contour following by the row unit. The suspension mechanism comprises sliding suspension elements. These suspension elements extend upwardly from a soil-engaging wheel of the row unit to an upper draught connection means for the row unit. Height-adjustable connection means is provided to connect the suspension mechanism to the soil-engagable seed unit. This connection means maintains the attitude of the seed unit substantially constant at all adjusted positions. In one embodiment the connection means comprises a parallelogram linkage. In another embodiment it comprises an upwardly extending guide and a slidable member received thereon, together with fixing means to fix the slidable member in a chosen position.

The sliding suspension elements are in the form of telescopic elements received one within the other. Two pairs of telescopic suspension elements are provided, one pair at each side of the soil-engaging wheel. The pairs of suspension elements are arranged in the manner of the front fork suspension assembly of a two-wheel road vehicle, such as a motorcycle.

The suspension elements extend upwardly and rearwardly (with respect to the normal direction of forward motion of the drill) from the soil engaging wheel. The attitude of the suspension elements is from 90 degrees to 45 degrees with respect to the horizontal, preferred inclinations being from 90 degrees to 30 degrees and 10 degrees to 20 degrees. In the embodiment, the inclination is from 14 degrees to 16 degrees.

In the embodiments, resilient means is provided to enhance penetration by the coulter of the seed unit and to increase the damping effect on contour following of the seed unit. In one embodiment, a coiled compression spring acts between the sliding suspension elements. In another embodiment a torsion spring acts between a relatively fixed portion of the drill and the lower of the two sliding suspension elements. In both cases upward movement of the seed unit is resiliently resisted.

In the embodiments, damping is provided to resist relative movement of the sliding suspension elements. The damping means arises from frictional forces associated with sliding movement of the suspension elements. The geometry of the suspension assembly is such that the frictional damping of the assembly varies according to the magnitude of the ground contour engaged by the soil engaging front wheel.

The upper of the two sliding suspension elements is secured by a bracket to the toolbar of the seed drill. In use, the toolbar is height-controlled by land wheels. These wheels drive the seed units through a transmission system extending lengthwise of the toolbar. The transmission system comprises inter-fitting transmission elements extending lengthwise of the toolbar and serving to couple together and to couple to the land wheel drive, a series of pulleys, one for each row unit. The transmission elements are preferably of the male and female kind providing sliding length adjustment. In the embodiment a dog-and-bone coupling system is provided whereby individual portions of the transmission can move out of axial alignment with other portions while still transmitting drive thereto or therefrom. The pulleys in the system are individually mounted on swingable mounting arms which are spring loaded to tension in the drive belts coupled thereto. These belts transmit drive to the seed units. Swinging motion of the pulleys is accommodated by the dog-and-bone transmission system. Such swinging movement itself accommodates contour following movement of the seed units arising from sliding of the suspension elements.

In the embodiment, the soil engaging wheel connected to the suspension elements is the front or leading wheel of the row unit having regard to the direction of normal forward motion. A rear press wheel is mounted on the row unit. The press wheel is not mounted on the seed unit. It is pivotally connected to the upper end of the suspension assembly, whereby it does not affect contour following.

A relatively narrow seed press wheel is mounted on the seed unit by a novel mounting assembly whereby the seed press wheel is effectively castored. The mounting arrangement for the seed press wheel comprises a slotted mounting arrangement permitting lateral movement while setting up restoring forces due to the resulting offset line of draught, thereby giving a castor action which is assisted by soil forces. Such a self-castoring seed press wheel arrangement is of benefit for all kinds of precision seed drills and a further aspect of the invention relates to the provision of such a wheel for a precision seed drill as claimed.

Embodiments of the invention will now be described by way of example with reference to the accompanying drawings in which:

Fig. 1 shows a side elevation view of a row unit of a precision seed drill according to the invention;

Fig. 2 shows a perspective view of a second embodiment of a seed drill according to the invention;

Fig. 3 shows a side elevation view of the embodiment of Fig. 2, with certain minor detailed differences;

Fig. 4 shows a plan view of the embodiment of Fig. 3; and

Figs. 5 and 6 show on a larger scale, views generally in the direction of Arrow V in Fig. 3, illustrating the construction of a dog-and-bone drive arrangement.

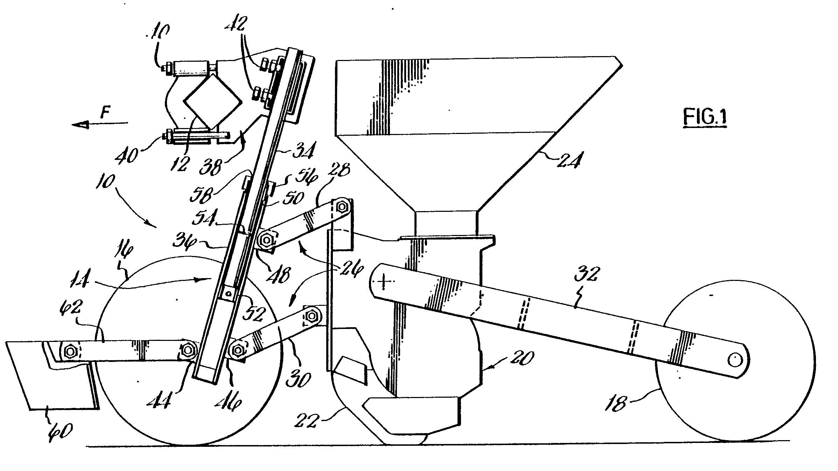

As shown in Fig. 1 of the drawings, a row unit 10 of a precision seed drill is mounted on a toolbar 12 by a suspension mechanism 14.

Row unit 10 comprises soil-engagable wheels 16, 18, a seeding unit 20 having a coulter 22 and a hopper 24.

Seeding unit 20 is connected to suspension assembly 14 by a parallelogram linkage 26 comprising upper and lower links 28, 30.

Rear wheel 18 is in the form of a press wheel mounted on a rearwardly extending arm 32 fixed to seeding unit 20 at a pre-set attitude. The attitude of parallelogram linkage 26 relative to seeding unit 20 can be adjusted by a screw threaded adjuster (not shown) whereby the height of coulter 22 relative to front wheel 16 can be adjusted.

Seeding unit 20 comprises a suitable seed selection mechanism (not shown).

Suspension mechanism 14 comprises sliding suspension elements 34, 36. Suspension element 34 comprises a rod adjustably secured to a bracket assembly 38 fixed by bolts 40 to toolbar 12. Rod 34 is height-adjustable relative to bracket assembly 38 by means of adjustment bolt 42 and associated nuts.

The lower sliding suspension element 36 is in the form of a tube having ears 44, 46, 48 to receive pins providing the journal axis of front wheel 16, and of upper and lower links 28, 30.

Suspension rod 34 is slidable in a collar 50 fixed to the upper end of suspension tube 36. At the lower end of rod 34 a second collar 52 is fixed to rod 34 and slides in suspension tube 36. A spring clip 54 is received in a shallow groove on rod 34 to limit downward movement of tube 36. An outer collar 56 has a dust ring 58 and locks the assembly in position.

A second suspension assembly, substantially identical to assembly 14 is provided on the other side of front wheel 16, and is likewise connected to seeding unit 20 by a second set of parallel links and corresponding related components.

A soil deflector 60 is mounted between the suspension assemblies by means of a generally U-shaped arm 62.

A centre seed press wheel (not shown in Fig. 1) is mounted on seed unit 20 to consolidate the narrow line of individual seeds placed by the seed unit.

In use, suspension elements 34, 36 execute sliding movement relative to each other to accommodate soil contours. This sliding movement occurs between sleeve 52 and the inner surface of tube 36, and between rod 34 and collar 50. Fig. 1 shows the nominal normal working position of the assembly with spring clip 54 positioned so as to permit downward movement of wheel 16 until the spring clip reaches collar 50. Likewise, upward movement of the wheel is permitted until collar 56 engages bracket 38. Toolbar 12 is at a fixed height as determined by the land wheels (not shown). This effectively determines the height of rod 34. Tube 36 and wheel 16 move up and down relative to rod 34 in accordance with ground contours. Such movement is transmitted through the fixed linkage 26 to seed unit 20, whereby the latter follows ground contours also. Thus, suspension mechanism 14 serves to transmit draught forces to seed unit 20 while providing for friction-damped contour following of the wheel and seed unit as determined by relative sliding movement of the elements of the suspension assembly.

It will be appreciated that when front wheel 16 encounters a bump in the soil, the larger the bump or contour, the higher will be the position at which it initially makes contact with wheel 16, and hence the more rearwardly directly (rather than upwardly directed) will be the component of force acting on the suspension assembly and arising from the impact. Hence, the frictional damping force exerted between the sliding suspension elements 34, 36 will increase with increasing height of a soil contour encountered, and thus the damping effect will correspondingly increase. In this way, a balanced reaction to soil contours is obtained, whereby a much more uniform seeding depth may be achieved.

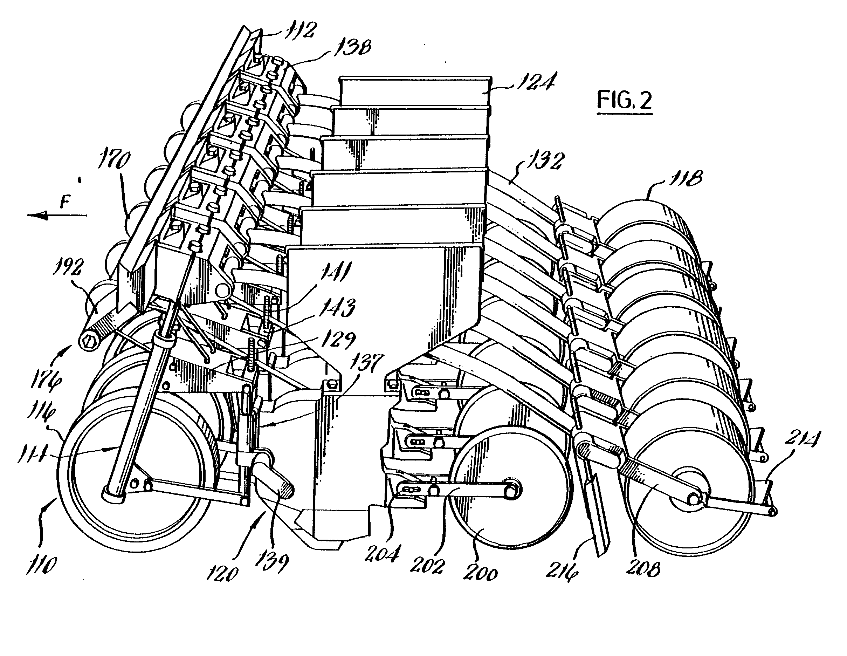

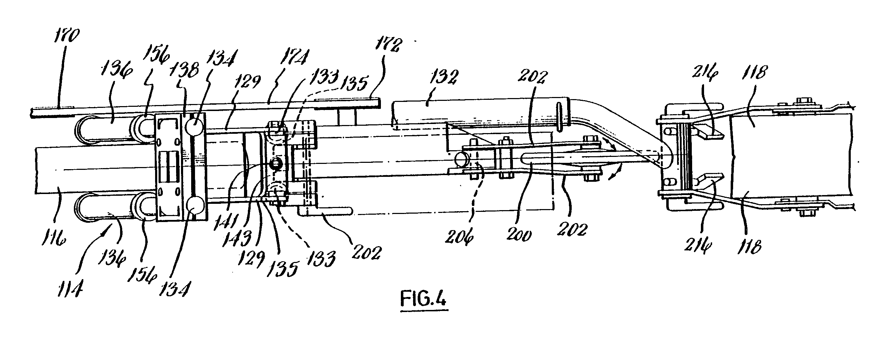

In the embodiment of Figs. 2 to 6, parts corresponding to the embodiment of Fig. 1 are identified by the same reference numeral increased by 100 so that, for example, front wheel 16 in Fig. 1 becomes wheel 116 in Fig. 2. It will be noted that there are minor differences of structure between the apparatus shown in Figs. 2, 3, and 4. Except where specifically commented on in the description below, these differences are of no particular significance, and Figs. 2 to 6 are treated as a single embodiment. This embodiment is constructed and arranged and operates as described above with reference to Fig. 1, except as follows.

The arrangement of toolbar 112, brackets 138 and upper fork members 134, is generally as in Fig. 1. Lower fork members 136 are in this embodiment arranged on the forward side of the axis of front wheels 116, but at the same angle of 15 degrees with respect to the vertical.

In place of the parallel links 28, 30, each suspension assembly 114 comprises a fixed upper link 129 secured to tube 136, and a lower link 131. An upwardly extending guide rod 133 is secured by bolts to the ends of links 129 and 131 so as to be in a fixed attitude with respect to tube 136. Seed unit 120 is adjustably secured to guide rod 133 by means of an adjustable sleeve 135 received thereon and which may be fixed by means of a screw clamp 137 having a hand lever 139. Lengthwise adjustment of the seed unit with respect to guide rod 133 is effected by means of a screw mechanism comprising a threaded rod 141 which co-operates with a trunnion 143 at the upper end of guide rods 133. Threaded rod 141 is connected to seed unit 120 so as to adjust same lengthwise of guides 133 by rotation of the rod 141. Such adjustment is effected without any attitude change of the seed unit. When the height of the latter has been chosen, it is clamped by means of hand lever 139.

Drive to seed unit 120 is derived from land wheels (not shown) through a transverse transmission system including pulleys 170, 172 and belts 174.

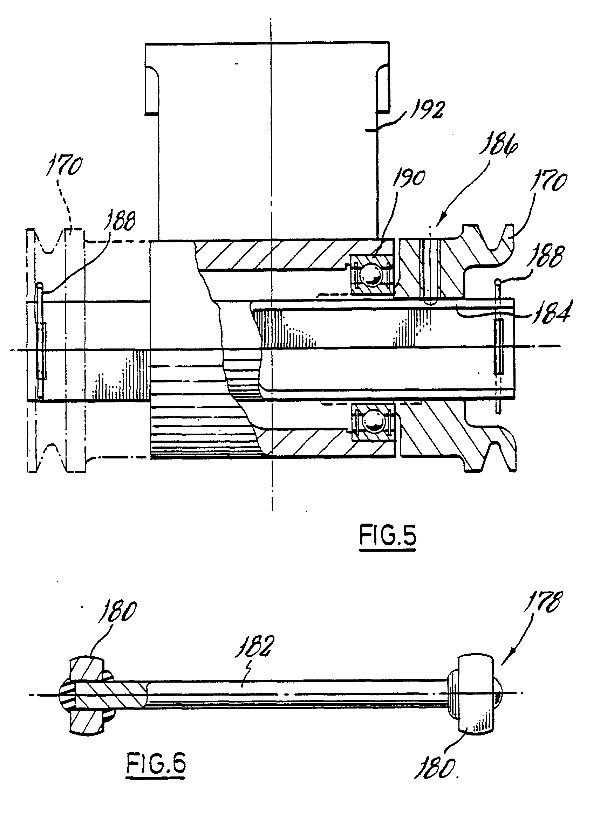

Figs. 5 and 6 show details of the structure of the transmission system 176, also seen in Fig. 2. Broadly, it is of the dog-and-bone kind in which the bones 178 have hexagonal end formations 180 mounted on a rod 182. The end formations are received in a complementary hexagonal-section tube 184 of bones 186 and are retained by spring clips 188, thereby providing a length-adjustable drive transmission. Each of the bones is mounted through bearings 190 on an arm 192 pivotally connected to the brackets 138 on toolbar 112. Pulleys 170 are formed at either end of the bones according to choice. Torsion springs 194 mounted on arms 192 and acting between fixed links 129 and brackets 138 serve to tension belts 174 and apply downward loading to tubular suspension elements 136.

A seed press wheel 200 is connected to seed unit 120 by mounting links 202 having lengthwise slots 204 receiving a connection pin 206 whereby lateral swinging movement of the press wheel is permitted and thereby giving it a self-returning castoring action under the effect of restoring forces.

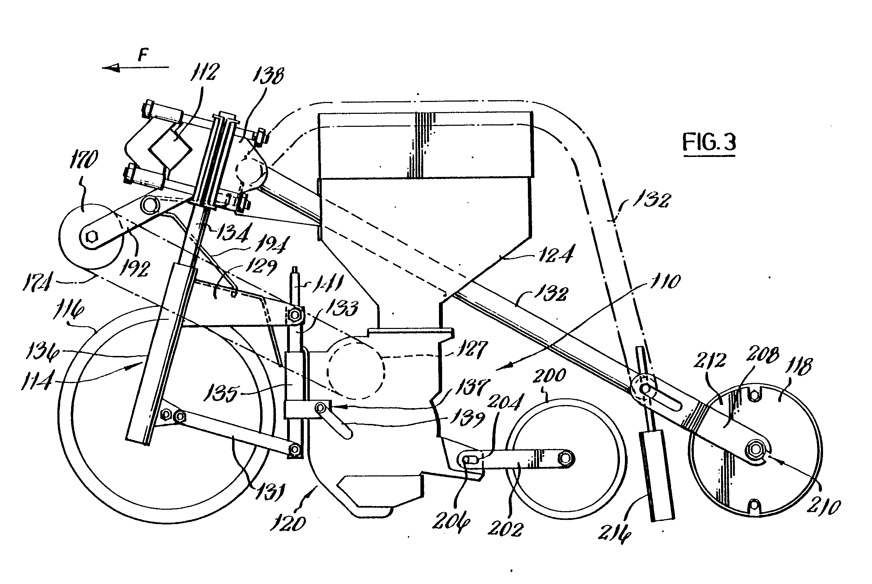

Rear press wheel 118 is freely trailed from brackets 138 on mounting arm 132 which may have either of the forms shown in Fig. 3. As shown in Figs. 2 and 3, the rear press wheel is mounted on forks 208 formed with end slots 210 whereby the press wheel can be quickly detached in order to substitute a press wheel of different profile. The press wheel has internal weights 212 secured within its dish structure, and has a rear scraper 214. Covering blades 216 ahead of the rear press wheel are adjustable both for angle of inclination and depth.

In use, this embodiment operates substantially as that of Fig. 1, with the exception of the manner of setting the height of seed unit 120 with respect to forward wheel 116 by means of threaded adjuster 141.

Resilient means may be provided on the suspension assembly, including the possibility of providing coiled springs in or on the suspension units, perhaps in the manner of motor cycle front forks.

A single fork or suspension assembly could be provided for each wheel. Obviously, any form of seed unit could be mounted between wheels 16, 18 so as to be drawn and caused to contour-follow by the suspension assembly.

**Claims**

1. An agricultural precision seed drill comprising:
    laterally extending toolbar means (12) for attachment to a tractor to be drawn thereby; and
    a series of row units mounted at intervals along the length of the toolbar means to be drawn thereby;
    each row unit (10) comprising front and rear soil-engaging wheels (16, 18) for contour-following and seed-pressing, a seeding unit (20) being mounted between the front and rear wheels, and comprising a coulter to open a furrow in a prepared seed bed to receive seed from the seeding unit; characterised in that:
    the front wheel (18) of each row unit is connected to the toolbar means (12) by a suspension mechanism (14) comprising a pair of upwardly and, with respect to the normal forward motion of the drill, rearwardly extending suspension members (34, 36) in telescoping arrangement each with the other;
    the suspension members (34, 36) each having at least one sliding bearing surface (52), said bearing surfaces being formed each for sliding frictional engagement with the other, whereby draft forces are transmitted from the toolbar means (12) to the row unit (10) between said bearing surfaces (52, 36), and whereby the frictional damping of the contour-following action of the front soil-engaging wheel (16) by the sliding bearing surfaces in response to soil contours encountered by the wheel increases with increased contour height.

2. A precision seed drill according to claim 1 characterised in that said suspension members (34, 36) extend upwardly and rearwardly from the front soil-engaging wheel (16) at from 10 to 20 degrees with respect to the vertical.

3. A precision seed drill according to claim 1 characterised in that said suspension members (34, 36) comprise bearing surfaces (52, 36; 50, 36) formed for sliding engagement each with the other at locations spaced lengthwise of said suspension members, the arrangement being such that the spacing of the bearing surfaces increases with increasing downward loading on the front soil-engaging wheel (16).

4. A precision seed drill according to claim 1 characterised by two pairs of upwardly extending suspension members (34, 36) provided, one pair at each side of the front soil-engaging wheel (16).

5. A precision seed drill according to claim 1 characterised by resilient means connected between said suspension members (34, 36) to resist relative sliding movement thereof in the direction caused by convex ground contours in use.

6. A precision seed drill according to claim 1 characterised in that said seeding unit (120) is connected to the front contour following wheel (116) by height adjustment means (137) which maintains the attitude of the seeding unit substantially constant at all adjusted positions thereof.

7. A precision seed drill according to claim 6 characterised in that said height adjustment means comprises upwardly-extending guide means (133) and a slidable member (135) received thereon, together with fixing means (139) for fixing the position of said slidable member relative to the guide at a chosen location.

8. A precision seed drill according to claim 1 characterised in that said rear press wheel (118) is directly connected to the upper one (134) of said upwardly extending suspension members to be drawn thereby in use and to be supported thereby in transport.

9. A precision seed drill according to claim 1 characterised in that an additional seed press wheel (200) is provided and mounted on said seeding unit (120) by a pivotal connection (206) permitting lateral swinging movement and a self-returning castoring action of the press wheel (200).

10. A precision seed drill according to claim 1 characterised by a drive transmission (170, 172, 174) for said row units (110), the drive transmission comprising telescopic drive elements (178, 184) having inter-engaging drive formations and permitting length adjustment of the drive transmission in the lengthwise direction of the toolbar means (112), and permitting non-axial alignment of the elements of the drive transmission.

## Patentansprüche

1. Landwirtschaftliche Präzisionsdrillmaschine mit

einer sich seitlich erstreckenden Geräteträgereinrichtung (12) zur Befestigung an einem Traktor, um von dieser gezogen zu werden, und

mit einer Serie von Reiheneinheiten, die in Abständen über die Länge der Geräteträgereinrichtung angeordnet sind, um von dieser gezogen zu werden,

wobei jede Reiheneinheit (10) ein vorderes und ein hinteres auf dem Boden aufstehendes Rad (16, 18), um der Kontur zu folgen und das Saatgut einzudrücken, wobei eine Säeinheit (20) zwischen Vorder- und Hinterrad angeordnet ist, und eine Pflugmesser aufweist, um eine Furche in einem vorbereiteten Aussäbett zu öffnen, um Samen aus der Säeinheit aufzunehmen, dadurch gekennzeichnet,

daß das Vorderrad (18) jeder Reiheneinheit mit der Geräteträgereinrichtung (12) über einen Aufhängungsmechanismus (14) verbunden ist, der ein Paar nach oben stehender und bezüglich der normalen Vorwärtsbewegung der Drillmaschine sich nach hinten erstreckender Aufhängungselement (34, 36) in teleskopartiger Anordnung untereinander aufweist, daß jedes der Aufhängungselemente (34, 36) wenigstens eine Gleitlagerfläche (52) aufweist, daß jede der Lagerflächen ausgebildet ist für einen gleitenden Reibeingriff mit der anderen, wodurch Zugkräfte von der Geräteträgereinrichtung (12) zu der Reiheneinheit (10) zwischen den Lagerflächen (52, 36) übertragen werden, und wodurch die Reibungsdämpfung durch die Gleitlagerflächen bei der der Kontur folgenden Aktion des vorderen auf dem Boden aufstehenden Rades (16) ansprechend auf die Bodenkonturen, auf welche das Rad trifft, mit anwachsender Konturhöhe zunimmt.

2. Präzisionsdrillmaschine nach Anspruch 1, dadurch gekennzeichnet, daß die Aufhängungselemente (34, 36) sich nach oben und hinten von dem vorderen auf dem Boden aufstehenden Rad (16) unter einem Winkel von 10° bis 20° gegenüber der Vertikalen erstrecken.

3. Präzisionsdrillmaschine nach Anspruch 1, dadurch gekennzeichnet, daß die Aufhängungselemente (34, 36) Lagerflächen (52, 36; 50, 36) aufweisen, die für einen Gleiteingriff untereinander an Stellen im Abstand über die Länge der Kupplungselemente ausgebildet sind, und daß die Anordnung derart ist, daß der Abstand der Lagerflächen anwächst mit zunehmender nach unten gerichteter Belastung auf das vordere auf dem Boden aufstehende Rad (16).

4. Präzisionsdrillmaschine nach Anspruch 1, dadurch gekennzeichnet, daß zwei Paar nach oben sich erstreckender Aufhängungselemente (34, 36) vorgesehen sind, und daß ein Paar an jeder Seite des vorderen auf dem Boden aufstehenden Rades (16) vorgesehen ist.

5. Präzisionsdrillmaschine nach Anspruch 1, dadurch gekennzeichnet, daß eine elastische Einrichtung zwischen den Aufhängungselementen (34, 36) angeordnet ist, um einer relativen Gleitbewegung von diesen in der Richtung Widerstand entgegenzusetzen, die im Gebrauch durch konvexe Bodenkonturen bewirkt wird.

6. Präzisionsdrillmaschine nach Anspruch 1, dadurch gekennzeichnet, daß die Säeinheit (120) mit dem vordern der Kontur folgenden Rad (116) über eine Höheneinstelleinrichtung (137) verbunden ist, welche die Stellung der Säeinheit bei allen eingestellten Position im wesentlichen konstant hält.

7. Präzisionsdrillmaschine nach Anspruch 6, dadurch gekennzeichnet, daß die Höheneinstelleinrichtung eine sich nach oben erstreckende Führungseinrichtung (133) und ein daran angeordnetes Gleitelement (135) zusammen mit einer Befestigungseinrichtung (139) zum Fixieren der Position des Gleitelementes relativ zu der Führung an einer ausgewählten Stelle aufweist.

8. Präzisionsdrillmaschine nach Anspruch 1, dadurch gekennzeichnet, daß das hintere Druckrad (118) direkt an den oberen (134) der sich nach oben erstreckenden Aufhängungselemente angeordnet ist, um im Gebrauch gezogen und beim Transport angestützt zu werden.

9. Präzisionsdrillmaschine nach Anspruch 1, dadurch gekennzeichnet, daß ein zusätzliches Saatdruckrad (200) vorgesehen und an der Säeinheit (120) über eine Schwenkverbindung (206) befestigt ist, die eine seitliche Schwenkbewegung und eine selbstrückstellende Schwenkrollenbewegung des Druckrades (200) ermöglicht.

10. Präzisionsdrillmaschine nach Anspruch 1, gekennzeichnet durch eine Antriebsübertragung (170, 172, 174) für die Reiheneinheiten (110), wobei die Antriebsübertragung teleskopartige Antriebselemente (178, 184) aufweist, die gegenseitig eingreifende Antriebsformationen aufweisen und eine Längeneinstellung der Antriebsübertragung in Längsrichtung der Geräteträgereinrichtung (112) und eine nicht-axiale Ausrichtung der Elemente der Antriebsübertragung ermöglichen.

**Revendications**

1. Semoir agricole de précision comprenant:
—une poutre porte-outils (12) s'étendant latéralement, pour la fixation à un tracteur de manière à être tirée par celui-ci, et
—une série d'unités de ligne montées à intervalles sur la longueur de la poutre porte-outils de manière à être tirées par celle-ci;
—chaque unité de ligne (10), comprenant des roues avant et arrière de contact avec le sol (16, 18) pour suivre le contour du sol et presser les graines, un dispositif d'ensemencement (20) étant monté entre les roues avant et arrière, et comprenant un soc pour ouvrir un sillon dans un terrain d'ensemencement préparé pour recevoir les graines venant du dispositif d'ensemencement; caractérisé en ce que
la roue avant (18) de chaque unité de ligne est reliée à la poutre porte-outils (12) par un mécanisme de suspension (14) comportant une paire d'éléments de suspension (34, 36) s'étendant vers le haut et vers l'arrière par rapport à la marche avant normale du semoir, ces éléments étant en relation télescopique mutuelle;
les éléments de suspension (34, 36) présentant chacun au moins une surface de portée coulissante (52), lesdites surfaces de portée étant prévues chacune pour un contact coulissant à frottement mutuel, de sorte que des forces de traction sont transmises par la poutre porte-outils (12) à l'unité de ligne (10) entre lesdites surfaces de portée (52, 36), et de sorte que l'amortissement par frottement de l'action de suivi de contour de la roue avant de contact avec le sol (16) par les surfaces de portée coulissantes en réponse aux contours du sol rencontrés par la roue augmente lorsque la hauteur du contour augmente.

2. Semoir de précision suivant la revendication 1, caractérisé en ce que lesdits éléments de suspension (34, 36) s'étendent vers le haut et vers l'arrière à partir de la roue avant de contact avec le sol (16), suivant un angle de 10 à 20° par rapport à la verticale.

3. Semoir de précision suivant la revendication 1, caractérisé en ce que lesdits éléments de suspension (34, 36) comprennent des surfaces de portée (52, 36; 50, 36) prévues pour un contact coulissant mutuel, à des endroits espacés dans le sens de la longueur desdits éléments de suspension, l'agencement étant tel que l'espacement des surfaces de portée augmente lorsque la charge vers le bas sur la roue avant de contact avec le sol (16) augmente.

4. Semoir de précision suivant la revendication 1, caractérisé par deux paires d'éléments de suspension s'étendant vers le haut (34, 36), une paire étant prévue de chaque côté de la roue avant de contact avec le sol (16).

5. Semoir de précision suivant la revendication 1, caractérisé par des moyens élastiques connectés entre lesdits éléments de suspension (34, 36) de manière à s'opposer à leur mouvement coulissant relatif dans la direction résultant de contours convexes du sol, en utilisation.

6. Semoir de précision suivant la revendication 1, caractérisé en ce que ledit dispositif d'ensemencement (120) est relié à la roue avant de suivi de contour (116) par des moyens de réglage de hauteur (137) qui maintiennent l'attitude du dispositif d'ensemencement sensiblement constante à toutes ses positions réglées.

7. Semoir de précision suivant la revendication 6, caractérisé en ce que lesdits moyens de réglage de hauteur comprennent des moyens de guidage s'étendant vers le haut (133) et une pièce coulissante (135) reçue sur ces moyens, en combinaison avec des moyens de blocage (139) pour fixer la position de ladite pièce coulissante par rapport au guidage, à un endroit choisi.

8. Semoir de précision suivant la revendication 1, caractérisé en ce que ladite roue arrière de pression (118) est directement reliée à l'élément supérieur (134) desdits éléments de suspension s'étendant vers le haut, de manière à être tirée par celui-ci en utilisation et à être supportée par celui-ci pendant le transport.

9. Semoir de précision suivant la revendication 1, caractérisé en ce qu'une roue supplémentaire de pression de graines (200) est prévue et montée sur ledit dispositif d'ensemencement (120) par une connexion pivotante (206) qui permet un mouvement latéral oscillant et une action pivotante à retour automatique de la roue de pression (200).

10. Semoir de précision suivant la revendication 1, caractérisé par une transmission d'entraînement (170, 172, 174) pour lesdites unités de ligne (110), la transmission d'entraînement comprenant des éléments d'entraînement télescopiques (178, 184) comportant des configurations d'entraînement en prise mutuelle et permettant un réglage de longueur de la transmission d'entraînement dans le sens longitudinal de la poutre porte-outils (112), et permettant un non alignement axial des éléments de la transmission d'en-traînement.

EP  0 195 808  B1

FIG.1

1

FIG.2

FIG.3

EP 0 195 808 B1

FIG.4

FIG.5

FIG.6